# EUROPÄISCHE PATENTANMELDUNG

(11) **EP 1 152 138 A2**
(43) Veröffentlichungstag der Anmeldung: **07.11.2001**
(21) Anmeldenummer: 01110266.2
(22) Anmeldetag: 25.04.2001
(51) Int. Cl.: F02B 41/06

(54) **Verfahren zum Betreiben eines Verbrennungsmotors sowie Verbrennungsmotor**

(30) Priorität: 02.05.2000 AT 7612000
(71) Anmelder: Winkler, Ulrike, A-6850 Dornbirn (AT)
(72) Erfinder: Nagel, Edmund F., 6800 Feldkirch (AT)
(74) Vertreter: Hefel, Herbert, Dipl.-Ing.

(57) **Zusammenfassung**

Bei einem Verfahren zum Betreiben eines Verbrennungsmotors strömt das bei der Verbrennung gebildete, unter einem Überdruck stehende, heiße Verbrennungsgas in eine von der Brennkammer (7) getrennte Expansionskammer (12) ein, in der es einen Kolben (1) verschiebt. Zumindest in einem Teillastbetrieb des Motors erreicht das Verbrennungsgas bereits vor Ende der Expansionsphase des Verbrennungsgases in der Expansionskammer (12) Atmosphärendruck und in der Folge setzt sich die Verschiebung des Kolbens (1) in die gleiche Bewegungsrichtung unter weiterer Expansion des Verbrennungsgases in der Expansionskammer (12) fort, wobei sich ein unterhalb des Atmosphärendrucks liegender Druck ausbildet. Am Ende der Expansionsphase des Verbrennungsgases wird in das unter diesem Unterdruck stehende Verbrennungsgas Kühlflüssigkeit eingesprüht, wobei sich der Druck des Verbrennungsgases weiter verringert (Fig. 1)

## Beschreibung

Die Erfindung betrifft ein Verfahren zum Betreiben eines Verbrennungsmotors, der eine Brennkammer aufweist, in der ein Treibstoff getaktet verbrannt wird und aus der das bei der Verbrennung gebildete, unter einem Überdruck stehende, heiße Verbrennungsgas in eine von der Brennkammer getrennte Expansionskammer einströmt, in der es einen Kolben verschiebt, wobei am Ende der Expansionsphase des Verbrennungsgases eine Kühlflüssigkeit in die Expansionskammer eingesprüht wird und der durch die plötzliche Abkühlung des heißen Verbrennungsgases hervorgerufene Unterdruck in der Expansionskammer auf den Kolben einwirkt und der Kolben unter Einwirkung dieses Unterdrucks Arbeit leistet.

Weiters betrifft die Erfindung einen Verbrennungsmotor mit einer Brennkammer zur getakteten Verbrennung eines Treibstoffes unter Bildung eines Verbrennungsgases, einer mit der Brennkammer über ein steuerbares Brennkammer-Auslaßventil verbundenen, separaten Expansionskammer, die einen verschiebbar gelagerten Kolben zur Umsetzung von Energie des Verbrennungsgases in mechanische Arbeit bzw. Energie aufweist, wobei zumindest eine in die Expansionskammer mündende Einspritzdüse zum Einsprühen einer Kühlflüssigkeit zur plötzlichen Volumsverringerung des expandierten Verbrennungsgases vorgesehen ist.

Ein derartiges Verfahren zum Betreiben eines Verbrennungsmotors bzw. ein derartiger Verbrennungsmotor ist bereits aus der EP 0 957 250 A2 bekannt. Bei diesem Verbrennungsmotor wird am Ende der Expansionsphase, wenn der Kolben den unteren Totpunkt erreicht hat und das Verbrennungsgas sich etwa auf Atmosphärendruck entspannt hat, Kühlwasser in die Expansionskammer eingesprüht. Der durch die plötzliche Abkühlung des heißen Verbrennungsgases hervorgerufene Unterdruck zieht den Kolben nach oben in Richtung seines oberen Totpunktes, wobei ein Federspeicher geladen wird. Die gespeicherte Energie wird in der nächsten Expansionsphase, wenn sich der Kolben wiederum vom oberen zum unteren Totpunkt bewegt, an den Kolben abgegeben. Durch dieses Einsprühen einer Kühlflüssigkeit kann auch die thermische Energie der heißen Verbrennungsgase zur Erbringung einer Arbeit herangezogen werden, welche andernfalls bei herkömmlichen Motoren ohne eine derartige Einspritzung von Kühlflüssigkeit ungenutzt durch den Auspuff abgeleitet wird.

Aufgabe der Erfindung ist es, ein Verfahren der eingangs genannten Art weiter zu verbessern, wobei der Wirkungsgrad des Verbrennungsmotors noch einmal erhöht werden kann. Erfindungsgemäß gelingt dies bei einem Verfahren der eingangs genannten Art dadurch, daß das Verbrennungsgas zumindest im Teillastbetrieb des Motors bereits vor Ende der Expansions-phase des Verbrennungsgases in der Expansionskammer Atmosphärendruck erreicht und sich in der Folge die Verschiebung des Kolbens in die gleiche Bewegungsrichtung unter weiterer Expansion des Verbrennungsgases in der Expansionskammer fortsetzt, wobei sich ein unterhalb des Atmosphärendrucks liegender Druck, vorzugsweise ein unterhalb des 0,8fachen Atmosphärendrucks liegender Druck, in der Expansionskammer ausbildet und die Kühlflüssigkeit am Ende der Expansionsphase des Verbrennungsgases in das unter diesem Unterdruck stehende Verbrennungsgas eingesprüht wird, wobei sich der Druck des Verbrennungsgases weiter verringert.

Eine derartige Verdünnung des Verbrennungsgases auf einen Wert unter Atmosphärendruck, bevor die Implosion des Verbrennungsgases durch Einspritzen der Kühlflüssigkeit durchgeführt wird, hat in ähnlicher Weise einen wirkungsgradsteigernden Effekt, wie eine Verdichtung der der Brennkammer zugeführten Luft vor der Verbrennung des Treibstoff-Luftgemisches zu einem höheren Wirkungsgrad führt als die Verbrennung des Treibstoff-Luftgemisches bei Atmosphärendruck. Bevorzugterweise liegt der Druck des Verbrennungsgases in der Expansionskammer.unmittelbar vor Einleitung der Implosionsphase aber oberhalb des 0,3fachen Atmosphärendrucks.

In einem bevorzugten Ausführungsbeispiel der Erfindung wird eine Verdichtung der der Brennkammer zugeführten Luft ebenfalls durchgeführt, wobei vorteilhafterweise der Kolben über eine Kolbenstange mit einem Verdichterkolben einer Verdichterpumpe verbunden ist und die Verdichtung während der Aufwärtsbewegung des Kolbens vom unteren Totpunkt zum oberen Totpunkt erfolgt und vom Unterdruck in der Expansionskammer unterstützt wird.

Mit dem Ausdruck "Expansionsphase" ist die Phase des Arbeitszyklus des Motors gemeint, in welcher sich das Volumen der Expansionskammer des Motors vergrößert und das Verbrennungsgas folglich expandiert (selbsttätig oder durch Kraftzuführung). Nach dem Einspritzen der Kühlflüssigkeit folgt die "Implosionsphase", in der sich das Volumen der Expansionskammer verringert, wobei der Druck des Verbrennungsgases wiederum in Richtung Atmosphärendruck zunimmt. Nach Überschreiten des Atmosphärendrucks folgt eine "Auspuffphase", in der das Verbrennungsgas aus der Expansionskammer ausgestoßen wird. Anschließend folgt bevorzugterweise eine "Wartephase" des Kolbens, in der Treibstoff in der Brennkammer verbrannt wird und der bevorzugterweise als Hubkolben ausgebildete Kolben an seinem oberen Totpunkt OT verharrt. Nachder, vorteilhafterweise vollständigen, Verbrennung des Treibstoffs in der Brennkammer wird die nächste Expansionsphase eingeleitet.

Aus der US-PS 5,311,739 ist zwar bereits ein Verbrennungsmotor mit einer von der Brennkammer separaten Expansionskammer bekannt, bei dem das Verbrennungsgas im Teillastbetrieb des Motors gegen Ende der Expansionsphase einen Wert unterhalb des Atmosphärendrucks annehmen kann. Dieser - hier an sich unerwünschte Effekt - tritt auf, da die Volumengrößen der Brennkammer und der Expansionskammer durch das Gasvolumen im Vollastbetrieb vorgegeben sind und bei Teillasten daher gegen Ende des mechanisch erzwungenen Hubweges ein Unterdruck entsteht. Durch die in der US-PS 5,311,739 beschriebenen Maßnahmen kann der Motor auch im Teillastbetrieb, trotz dieses entstehenden Unterdrucks betrieben werden.

Ein Verbrennungsmotor der eingangs genannten Art, der sich zur Ausführung des erfindungsgemäßen Verfahrens in vorteilhafter Weise eignet, ist dadurch gekennzeichnet, daß an der Kolbenstange des Kolbens zumindest eine Rolle angeordnet ist, die ein Schubglied eines Kurvengetriebes bildet, wobei an der Rolle beidseitig Kurvenflächen des in beide Hubrichtungen des Kolbens wirkenden Kurvengetriebes anliegen.

Durch die Verwendung des beidseitig wirkenden Kurvengetriebes, mit dem die Kolbenstange des Kolbens verbunden ist, kann die Verdünnung des Verbrennungsgases vor der Einleitung der Implosionsphase durch Einsprühen der Kühlflüssigkeit in einfacher Weise durchgeführt werden. Solange das Verbrennungsgas in der Expansionskammer bei der Bewegung des Kolbens vom oberen Totpunkt zum unteren Totpunkt unter einem Überdruck steht, wirkt ein von einer mit der Kolbenstange in Verbindung stehenden Rolle gebildetes Schubglied auf die vom Kolben weiter entfernt liegende Kurvenfläche ein. Sobald der Druck des Verbrennungsgases in der Expansionskammer unter Atmosphärendruck fällt, wirkt die näher beim Kolben liegende Kurvenfläche auf dieses Schubglied ein, wobei die Abwärtsbewegung des Kolbens unterstützt wird und der Druck des Verbrennungsgases in der Expansionskammer unter Atmosphärendruck sinkt. Die zur Verdünnung des Verbrennungsgases benötigte Energie wird dabei der kinetischen Energie des Systems entzogen. Dieser Energieverlust wird jedoch dadurch mehr als kompensiert, daß in der folgenden Implosionsphase nach der Einsprühung der Kühlflüssigkeit der Druck in der Expansionskammer weiter abfällt als ohne eine solche Verdünnung und dadurch mehr Arbeit während des Weges des Kolbens vom unteren Totpunkt zum oberen Totpunkt in der Implosionsphase geleistet werden kann. Diese in der Implosionsphase geleistete Arbeit kann über das Kurvengetriebe direkt auf die vom Kurvengetriebe angetriebene Welle übertragen werden. In einem bevorzugten Ausführungsbeispiel der Erfindung wird vom Kolben bei dessen Aufwärtsbewegung eine Verdichterpumpe angetrieben. Falls die in der Implosionsphase zur Verfügung stehende Energie zum Antrieb der Verdichterpumpe alleine nicht ausreicht, wird über das Kurvengetriebe wiederum dem System kinetische Energie entzogen. Falls die in der Implosionsphase zur Verfügung stehende Leistung hingegen die benötigte Antriebsleistung für die Verdichterpumpe übersteigt, wird die zusätzliche Leistung über das Kurvengetriebe der vom Kurvengetriebe angetriebenen Welle zugeführt.

Ein erfindungsgemäßes Verfahren zum Betreiben eines Verbrennungsmotors bzw. ein erfindungsgemäßer Verbrennungsmotor eignen sich in vorteilhafter Weise zum Betreiben des Verbrennungsmotors mit einer Teillast. Ein erfindungsgemäßer Verbrennungsmotor kann dabei beispielsweise so ausgelegt sein, daß unter Vollast des Motors keine Verdünnung des Verbrennungsgases (= Druckabfall unter Atmosphärendruck) vor Einleitung der Implosionsphase stattfindet. Unter Teillast, wenn geringere Mengen von Treibstoff und Luft der Brennkammer zugeführt werden, findet dagegen eine Verdünnung des Verbrennungsgases vor Erreichen des unteren Totpunktes des Kolbens statt. Aufgrund der niedrigeren Verdichtung in der Brennkammer sinkt dabei der Wirkungsgrad in der Expansionsphase, während durch die Verdünnung des Verbrennungsgases der Wirkungsgrad in der Implosionsphase steigt. Insgesamt kann dadurch ein ausgeglichenerer Wirkungsgrad für Vollast- und Teillastbetrieb des Motors erreicht werden.

Ein erfindungsgemäßer Motor, der unter Vollast und Teillast betreibbar ist, erlaubt weiters eine wesentlich einfachere Steuerung des Verbrennungsmotors im Vergleich zum aus der EP 0 957 250 A2 bekannten Verbrennungsmotor. Die Motorsteuerung (Steuerung der Hydraulikventile, der Wasser- und Treibstoffeinspritzung) kann beim erfindungsgemäßen Motor von einer einfachen Nockenpumpe ausgeführt werden, da die hydraulischen Impulse (Druckstöße) immer in einem definierten Segment der Umdrehung auftreten müssen und keine variablen Steuerzeiten bzw. variable Umdrehungswinkel auftreten. Außerdem kann das Starten des Motors in einfacher Weise durch einen auf die Nockenwelle einwirkenden Alternator (= Startermotor und Generator in einem) durchgeführt werden, wobei auch der Verdichterkolben der Verdichterpumpe über das Kurvengetriebe und den Kolben der Expansionskammer zwangsweise in Hub versetzt wird und dadurch der nötige Startluftdruck in die Brennkammer geladen wird, ohne daß eine separate Startluftpumpe benötigt wird.

Bei Stationärmotoren, die ständig bei Vollast betrieben werden, wird eine erfindungsgemäße Verdünnung des Verbrennungsgases vor der Implosionsphase im Vollastbetrieb des Motors vorgesehen. Eine Verdünnung des Verbrennungsgases vor Einleitung der Implosionsphase kann aber auch bei Motoren, die bei Voll- und Teillast betrieben werden, vorteilhaft im Vollastbetrieb durchgeführt werden.

Der nutzbare Effekt aus dem Verdünnen des Verbrennungsgases auf einen Druck unterhalb des atmosphärischen Umgebungsdrucks vor Einleitung der Implosionsphase wird nachfolgend in zwei bemaßten Vergleichsbeispielen veranschaulicht. In beiden Beispielen wird davon ausgegangen, daß die Expansion des Verbrennungsgases, beispielsweise bedingt durch eine Teilauslastung des Motors, nach dem halben Kolbenhub der Expansionsphase bis auf atmosphärischen Druck fortgeschritten ist.

Im ersten Fallbeispiel wird die Implosion nach Erreichen des atmosphärischen Druckes im Expansionszylinder eingeleitet - der Kolbenhub also nicht bis zum UT ausgeführt. Dermaßen kann die Implosion nur innerhalb des halbierten Hubweges (abzüglich des Teilweges für den Auspuffhub knapp vor OT) wirken. Im zweiten Fallbeispiel wird der Hub zum UT zu Ende geführt, wodurch zum einen ein Unterdruck im Expansionszylinder auftritt und zum anderen für diese Verdünnungsarbeit des Kolbens diesem von außen Arbeit zugeführt werden muß. Mit Einspritzen der Kühlflüssigkeit am UT in den Expansionszylinder wird das Abgas gekühlt. Wegen des aus dem Verdünnen bereits vor dem Implodieren bestehenden Unterdruckes erreicht der Gesamtunterdruck der Implosion einen tieferen Wert als im ersten Fallbeispiel ohne Verdünnen vor der Implosion.
Alleine aus der Arbeitsfähigkeit dieses zusätzlichen Druckanteiles unterhalb des Implosionsdruckes des ersten Fallbeispiels wird die gegen Ende des Expansionshubes für das Verdünnen des Abgases zugeführte Leistung während des Implosionshubes in etwa wieder rückgewonnen. Der danach verbleibende und zur Verdichtung bzw. höchstens teilweise auch nach außerhalb des Motors arbeitswirksame Unterdruck der Implosion wirkt nunmehr aber im Gegensatz zum ersten Fallbeispiel nicht nur innerhalb des halben Hubweges, sondern innerhalb des gesamten Hubes (abzüglich Anteil - Auspuffhub). Die Implosionsleistung ist somit innert der Fallbeispiele in etwa verdoppelt, bzw.: Die nutzbare Leistung aus der Implosionsphase ist, bezogen auf das zweite Fallbeispiel, mit Teillastbereich der vorausgegangenen Expansionsphase, in etwa gleich groß als mit Vollastlauf der vorausgegangenen Expansionsphase.

Daraus folgt weiters: Der günstigste Bereich des Erreichens eines atmosphärischen Druckes vom Verbrennungsgas zur Nutzbarmachung der erfindungsgegenständlichen Verdünnung liegt im Bereich um den mittleren Kolbenhub. Würde der atmosphärische Druckzustand des Verbrennungsgases schon in der Nähe des OT erreicht, stiege der Aufwand (Zuführung von Arbeit) zum Verdünnen des Abgases bis zum UT gegenüber der aus der Implosionsphase anschließend zu gewinnenden Arbeit unverhältnismäßig. Erreichte umgekehrt das Verbrennungsgas erst in der Nähe des UT atmosphärischen Druck, könnte das Verdünnen mangels weiterem Hubweg des Kolbens folglich kaum mehr auftreten.

Weitere Vorteile und Einzelheiten der Erfindung werden im folgenden anhand der beiliegenden Zeichnung erläutert, welche eine bevorzugte Ausführungsform der Erfindung in schematisierter Form darstellt. In der Zeichnung zeigen:

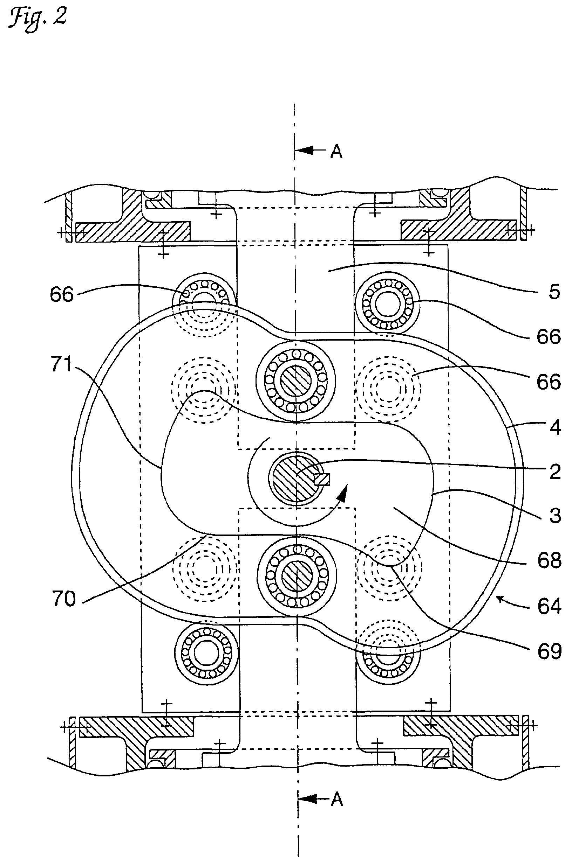

Fig. 1 einen schematischen Schnitt durch einen erfindungsgemäßen Verbrennungsmotor entlang der Längsmittelachse eines Kolbens bzw. entlang der Linie A-A von Fig. 2;
Fig. 2 einen Schnitt entlang der Linie B-B von Fig. 1;
Fig. 3 einen Schnitt entlang der Linie C-C von Fig. 1;
Fig. 4 einen Schnitt entlang der Linie D-D von Fig. 1 und
Fig. 5 ein Diagramm zur Darstellung des Taktzyklus des Motors.

Beim erfindungsgemäßen Verbrennungsmotor sind bevorzugterweise mindestens zwei auf die angetriebene Welle 2 von gegenüberliegenden Seiten wirkende, synchron laufende Kolben 1 vorgesehen. Es können dabei ein, zwei oder mehrere Paare von solchen gegenüberliegenden, jeweils synchron getakteten Paaren von Kolben 1 vorgesehen sein. Zumindest die jeweils gegenüberliegenden Kolben oder auch alle Kolben können dabei über dieselben inneren und äußeren Kurvenflächen 3, 4 und jeweils eigene Schubglieder in Form von an den Kolbenstangen 5 angeordneten Rollen 6 auf die Welle 2 wirken, wie aus der folgenden Beschreibung noch genauer hervorgehen wird.

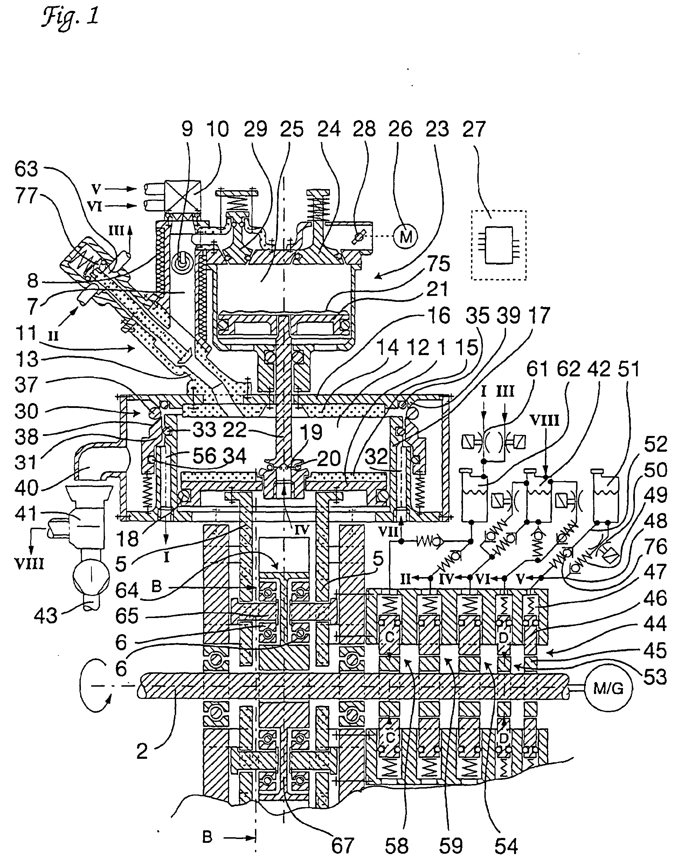

Jedem Kolben 1 ist mindestens eine Brennkammer 7 zur getakteten Verbrennung eines Treibstoffes zugeordnet. Die Brennkammer ist von einem Mantel aus einem wärmeisolierenden Material 8 umgeben. Nur in der Startphase erfolgt die Zündung des Treibstoff-Luftgemisches durch eine Zündkerze 9. Im Dauerbetrieb erhitzen sich die Wandungen der Brennkammer 7 über die Selbstentzündungstemperatur des Treibstoffes (auf über 700° Celsius) und die Zündung des Treibstoffes erfolgt direkt bei dessen Einspritzung in die Brennkammer 7, wenn er auf deren Wandungen auftrifft. Zusammen mit dem Treibstoff wird bevorzugterweise Wasser eingespritzt, um die Verbrennungstemperatur zu erniedrigen, was insbesondere zu einer NOx-Reduktion führt. Die Einspritzdüsen für den Treibstoff und das Wasser sind in Fig. 1 nur schematisch als Einheit 10 dargestellt, wobei die Zuführung des Treibstoffs durch den Pfeil V und die Zuführung des Wassers durch den Pfeil VI angedeutet sind.

Die Brennkammer 7 ist über ein steuerbares Brennkammer-Auslaßventil 11 mit einer von der Brennkammer 7 getrennten Expansionskammer 12 verbunden, die als Zylinderraum ausgebildet ist, in welchem der Kolben 1 verschiebbar gelagert ist. Das Brennkammer-Auslaßventil ist allmählich bzw. verzögert öffenbar, wie weiter unten noch genauer ausgeführt wird, und wirkt dadurch als Drosselventil für das durch die Verbrennung des Treibstoffes gebildete, unter Druck stehende, heiße Verbrennungsgas, welches aus der Brennkammer 7 in die Expansionskammer 12 bei sich öffnendem Brennkammer-Auslaßventil 11 strömt. Dadurch werden die auf den Kolben 1 und die weiteren beweglichen Teile des Verbrennungsmotors einwirkenden Druckspitzen stark verringert, so daß der Aufbau des Motors (insbesondere der Dichtungen) vereinfacht wird und der Verschleiß verringert wird. Die durch die Drosselwirkung des Brennkammer-Auslaßventils 11 auftretende weitere Erhitzung des Verbrennungsgases führt zu keiner maßgeblichen Verringerung des Wirkungsgrades, da auch die thermische Energie des Verbrennungsgases in der weiter unten beschriebenen Implosionsphase ausgenutzt wird. Zur Verhinderung von Konvektionsverlusten im Bereich des Brennkammer-Auslaßventils sind dessen vom heißen Verbrennungsgas berührten Teile (deren Schnittflächen in Fig. 1 gepunktet dargestellt sind) aus einem wärmeisolierenden Material, vorzugsweise einer Keramik, ausgebildet. Es könnte auch auf der Außenseite des Verbrennungsmotors der Bereich des Brennkammer-Auslaßventils von einer wärmeisolierenden Ummantelung umgeben sein.

Zur Vermeidung von Wärmeverlusten ist auch das vom Brennkammer-Auslaßventil 11 zur Expansionskammer 12 führende Leitungsstück 13 aus einem wärmeisolierenden Material ausgebildet (oder mit einer Wärmeisolierung umgeben). Im weiteren ist eine wärmeisolierende Schicht 14, 15, vorzugsweise aus einem keramischen Material, auch an der Innenseite des Zylinderkopfes 16 und an der der Expansionskammer 12 zugewandten Oberseite des Kolbens 1 angeordnet. Lediglich die Zylinderwand 17 weist keine derartige Wärmeisolierung auf, sondern ist im Gegenteil von einer inneren Wasserkühlung wassergekühlt, wie im folgenden beschrieben wird. Dadurch kann eine Kolbendichtung 18 aus Kunststoff verwendet werden, vorzugsweise aus Graphit-Teflon, der bis etwa 250 °C dauertemperaturbeständig ist. Eine derartige Kolbendichtung 18 ist wasserschmierbar.

Wenn der Kolben 1 den unteren Totpunkt UT erreicht hat, wird über mehrere in der Kolbenstange 22 ringförmig angeordnete Einspritzdüsen 19 Wasser in die Expansionskammer 12 zur Einleitung einer Implosionsphase eingespritzt. Diese Kühlflüssigkeit wird bis auf die Zylinderwand 17 gesprüht und bildet dort einen Wasserfilm zur Kühlung der Zylinderwand 17 und zur Schmierung der Kolbendichtung 18. Die Einspritzdüsen 19 werden von einem elastischen O-Ring 20 umgeben, der ein selbstschließendes Einspritz-Rückschlagventil bildet.

Der Unterdruck in der Expansionskammer nach dem Einspritzen der Kühlflüssigkeit dient einerseits zur Spülung der Brennkammer 7, andererseits wird dadurch der Kolben 1 nach oben in Richtung seines oberen Totpunkts OT gezogen. Der Kolben 1 ist über die Kolbenstange 22 mit dem Verdichterkolben 21 einer von einer Kolben-Zylinder-Einheit gebildeten Verdichterpumpe 23 verbunden. Bei der Abwärtsbewegung des Kolbens 1 und des damit verbundenen Verdichterkolbens 21 öffnet sich das als selbstschließendes Rückschlagventil ausgebildete Lufteinlaßventil 24 und Luft strömt in den Zylinderraum 25 ein. Je nach benötigter Luftmenge (in Abhängigkeit von der momentanen Leistungsabgabe des Motors) wird von einem Stellmotor 26, der von einer Motorsteuerung 27 angesteuert wird, eine Drosselklappe 28 mehr oder weniger weit geschlossen. Bei teilweise geschlossener Drosselklappe 28 bildet sich bei der Abwärtsbewegung des Kolbens 1 ein von der Stellung der Drosselklappe 28 abhängiges Vakuum im Zylinderraum 25 aus und die zur Verfügung stehende Luftmenge bei der anschließenden Aufwärtsbewegung des Verdichterkolbens 21 ist dadurch geringer. Bei der Aufwärtsbewegung des Kolbens 1 und des damit verbundenen Verdichterkolbens 21 öffnet sich das als selbstschließendes Rückschlagventil ausgebildete Luftauslaßventil 29 und eine entsprechende Luftmenge, die zu einem entsprechenden Verdichterdruck führt, wird in die Brennkammer 7 eingepreßt. Auf dem Verdichterkolben 21 ist ein Kissen 75 aus einem verformbaren Material angeordnet, damit am obersten Punkt dieses Kolbens alle Luft aus dem Zylinderraum 25 gepreßt wird, welche andernfalls als Luftfeder wirken würde, die zu unnötiger Reibung führen würde.

Während sich der Kolben 1 von seinem unteren Totpunkt UT in Richtung seines oberen Totpunktes OT bewegt, verdichtet sich das zunächst unter Unterdruck stehende Verbrennungsgas in der Expansionskammer, bis dessen Druck schließlich über Atmosphärendruck ansteigt und es in der "Auspuffphase" durch das Expansionskammer-Auslaßventil 30 ausströmen kann.

Das Expansionskammer-Auslaßventil 30 umfaßt ein die Zylinderwand 17 ringförmig umgebendes Stellglied 31, welches unter Beaufschlagung eines Hydraulikdruckes von seiner nach unten vorgespannten Stellung entlang der Zylinderwand 17 in Richtung des Zylinderkopfes 16 bewegbar ist. Es ist dazu eine Hydraulikleitung 32 vorgesehen, die in eine von O-Ringen 33, 34 abgedichtete Kammer mündet. Durch Beaufschlagung der Hydraulikleitung 32 verschiebt sich das Stellglied nach oben und drückt mit seinem freien Ende gegen einen in einer ringförmigen Nut im Zylinderkopf 16 angeordneten Dichtring 35, so daß die Expansionskammer-Auslaßöffnung 36 vom Stellglied 31 verschlossen wird. Diese Expansionskammer-Auslaßöffnung 36 ist als ringförmiger Spalt zwischen dem Zylinderkopf 16 und der Zylinderwand 17 ausgebildet. Dieser Verschluß des Expansionskammer-Auslaßventils 30 durch das Stellglied 31 wird während der Abwärtsbewegung des Kolbens 1 vom oberen Totpunkt zum unteren Totpunkt durchgeführt, um das unter Druck stehende Verbrennungsgas in der Expansionskammer 12 einzuschließen.

Bei druckloser Hydraulikleitung 32 befindet sich das Stellglied 31 in seiner nach unten vorgespannten Stellung. An der Außenseite des Stellgliedes 31 ist vor der Expansionskammer-Auslaßöffnung 36 ein elastischer O-Ring 37 angeordnet, der sich einerseits gegen eine Keilfläche 38 an der Außenseite des Stellgliedes 31 und andererseits an einem ringförmigen Fortsatz 39 am Zylinderkopf 16 abstützt. Dieser O-Ring 37 bildet somit bei geöffnetem Stellglied 31 ein selbstschließendes Rückschlagventil. Wenn der Druck des Verbrennungsgases bei sich nach oben bewegendem Kolben 1 über den Atmosphärendruck ansteigt, wird somit das vom O-Ring 37 gebildete, selbstschließende Rückschlagventil geöffnet und das Verbrennungsgas-Wassergemisch kann aus der Expansionskammer 12 ausströmen. Über ein Leitungsstück 40 gelangt es in einen Wasserabscheider 41, der analog zu dem in der EP 0 957 250 A2 beschriebenen Wasserabscheider aufgebaut sein kann. Das Kühlwasser wird entsprechend dem Pfeil VIII in den Wassertank 42 rückgeführt und das Verbrennungsgas kann durch den Auspuff 43 ausströmen.

Es folgt die Beschreibung der Nockensteuerung des Verbrennungsmotors. Über die Nockenpumpe 44 erfolgt die Einspritzung des Treibstoffs in die Brennkammer 7. Wenn der auf der Nockenscheibe 45 angeordnete Nocken auf den Tauchkolben 46 trifft und diesen in den Zylinderraum 47 drückt, wird der darin vorhandene Treibstoff einerseits über die mit V angedeutete Leitung durch die in der Einheit 10 vorgesehene Einspritzdüse in die Brennkammer 7 eingespritzt, andererseits über die Leitung 48, das Rückschlagventil 49 und das von der Motorsteuerung 27 verstellbare Drosselventil 50 in den Treibstofftank 51 zurückgeführt. Je nach Öffnungsgrad des Drosselventils 50 wird dabei ein unterschiedlich großer Teil des Treibstoffes in den Treibstofftank 51 zurückgeführt und der jeweils restliche Teil in die Brennkammer 7 eingespritzt. Nach dem Vorbeibewegen des auf der Nockenscheibe 45 angeordneten Nockens am Tauchkolben 46 bewegt sich dieser wieder aus dem Zylinderraum 47 heraus (Vorspannung durch eine Feder) und der Zylinderraum 47 füllt sich über die Leitung 52, in der das Rückschlagventil 76 angeordnet ist, wiederum mit Treibstoff.

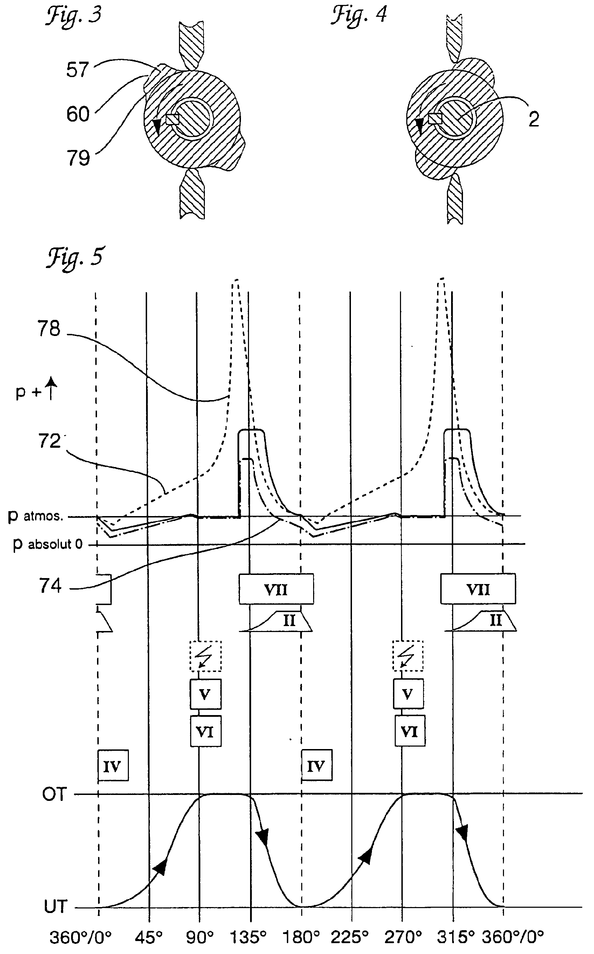

In analoger Weise funktioniert auch die Nockenpumpe 53 für die Wassereinspritzung in die Brennkammer 7 und die Nockenpumpe 54 für die Einspritzung des Kühlwassers in die Expansionskammer 12. Die Nocken 55 aller dieser Nockenscheiben 45 sind analog dem in Fig. 4 dargestellten Schnitt ausgebildet.

Um eine zu starke Erhitzung des für die Steuerung des Stellgliedes 31 des Expansionskammer-Auslaßventils 30 verwendeten Hydrauliköls zu verhindern, ist hier neben einer zuführenden Hydraulikleitung 32 auch eine abführende Hydraulikleitung 56 vorgesehen, um einen geschlossenen Kreislauf von Hydraulikflüssigkeit zu ermöglichen. Dazu weist der in Fig. 3 im Schnitt dargestellte Nocken 57 der Nockenpumpe 58 anschließend an eine steil ansteigende Flanke 79, mit der das Stellglied 31 in die geschlossene Position verschoben wird, eine flach ansteigende Flanke 60 auf, um den Abfluß durch die rückführende Hydraulikleitung 56 entlang der mit I angedeuteten Linie und die Drossel 61 zu kompensieren und das Stellglied 31 während des gesamten Verlaufs des Nockens 57 in der geöffneten Stellung zu halten, wobei Hydraulikflüssigkeit entsprechend dem Leitungsverlauf VII, 32, 56, I in den Hydrauliktank 62 fließt.

Über die Nockenpumpe 58 wird das Brennkammer-Auslaßventil geöffnet. Die entsprechende Nocke ist hierzu ähnlich wie die in Fig. 3 dargestellte Nocke 60 ausgebildet, nur daß die ansteigende Flanke 59 flacher ausgebildet ist, um das Brennkammer-Auslaßventil langsam zu öffnen. Im geöffneten Zustand des Brennkammer-Auslaßventils fließt ebenfalls über eine ansteigende Flanke entsprechend der Flanke 60 des Nockens 57 Hydraulikflüssigkeit von der Nockenpumpe 58 über die mit II angedeutete Leitung und die mit III angedeutete Leitung durch den Zylinderraum 63 des Brennkammer-Auslaßventils 11 in den Hydrauliktank 62, wobei der in die geschlossene Stellung des Brennkammer-Auslaßventils 11 vorgespannte Kolben 77 geöffnet gehalten wird.

Die Kolbenstange 5 des Kolbens 1 ist zweigeteilt und wird von zwei Stangen gebildet, die zu beiden Seiten der Kurvenscheibe 64 mit den inneren und äußeren Kurvenflächen 3, 4 liegen. Auf Achsen 65 sind Rollen 6 auf den einander zugewandten Seiten der beiden Stangen der Kolbenstange 5 gelagert, die zwischen den beiden Kurvenflächen 3, 4 angeordnet sind. Der Abstand zwischen den beiden Kurvenflächen 3, 4 ist dabei etwas größer als der Durchmesser der Rollen, so daß die Rollen 6, die als Schubglieder des Kurvengetriebes wirken, entweder auf der inneren Kurvenfläche 3 oder der äußeren Kurvenfläche 4 abrollen können. Wenn bei der Abwärtsbewegung des Kolbens 1 vom oberen Totpunkt zum unteren Totpunkt die Rollen 6 auf der inneren Kurvenfläche 3 abrollen, so wird der Welle 2 Energie zugeführt (durch den Überdruck des expandierenden Verbrennungsgases), falls die Rollen 6 bei der Abwärtsbewegung des Kolbens auf der äußeren Kurvenfläche 4 abrollen, so treibt die Welle 2 den Kolben 1 an (beispielsweise bei der Verdünnung des Verbrennungsgases in der Expansionskammer 12). Bei der Aufwärtsbewegung des Kolbens 1 vom unteren Totpunkt in Richtung des oberen Totpunktes erfolgt dagegen die Energiezufuhr zur Welle 2 im Fall des Abrollens der Rollen 6 auf der äußeren Kurvenfläche 4 und beim Abrollen der Rollen 6 über die innere Kurvenfläche 3 eine Energieentnahme.

Bei der inneren und bei der äußeren Kurvenfläche 3, 4 handelt es sich jeweils um eine umfangsgeschlossene Mantelfläche. Zwischen den beiden Rollen 6 ist ein die beiden Kurvenflächen 3, 4 verbindender Steg 67 angeordnet. Die innere Kurvenfläche 3 wird von der Umfangsfläche einer Kurvenscheibe 68 gebildet, die starr auf der Welle 2 sitzt. Der Abstand zwischen der inneren und der äußeren Kurvenfläche 3, 4 ist über den Umfang dieser Kurvenflächen 3, 4 konstant. Jeweils weisen die Kurvenflächen 3, 4 entlang ihres Umfangs drei Abschnitte auf, die im folgenden anhand der inneren Kurvenfläche 3 erläutert werden. Im ersten Abschnitt 69 nimmt der Abstand der Kurvenfläche vom Mittelpunkt der Welle 2 erst rasch, dann langsamer ab. Dieser erste Abschnitt ist der Abwärtsbewegung des Kolbens vom oberen Totpunkt zum unteren Totpunkt zugeordnet. Die anfänglich rasche Abnahme des Abstandes entspricht dabei der anfänglich raschen Abnahme des Drucks in der Expansionskammer. Im folgenden zweiten Abschnitt 70 nimmt der Abstand der Kurvenfläche 3 vom Wellenmittelpunkt wiederum zu. Dieser Abschnitt ist der Aufwärtsbewegung des Kolbens vom unteren Totpunkt zum oberen Totpunkt zugeordnet. Der Teil des Umfangs der Kurvenfläche, die vom ersten Abschnitt 69 eingenommen wird, ist dabei kleiner als derjenige des zweiten Abschnitts 70, vorzugsweise ist die Winkelausdehnung des Abschnitts 70 etwa 1,5 bis 2,5 mal größer als die des ersten Abschnitts 69 und liegt im Bereich zwischen 80 und 120 °. Dadurch erfolgt die Abwärtsbewegung des Kolbens vom OT zum UT schneller als dessen Aufwärtsbewegung vom UT zum OT. Dies hat zur Folge, daß die Tauschzeit zur Konvektionsübertragung von Wärme verkürzt wird, wodurch die Wärmeverluste des Motors verringert werden. Eine schnellere Abwärtsbewegung des Kolbens als dessen Aufwärtsbewegung ist durch den durchschnittlich größeren Druckunterschied zum Atmosphärendruck während der Expansionsphase im Vergleich zur Implosionsphase problemlos möglich.

Anschließend an den zweiten Abschnitt 70 folgt ein dritter Abschnitt 71, der einen konstanten maximalen Abstand vom Mittelpunkt der Welle 2 aufweist. Während des Ablaufs der Rollen 6 über diesen Abschnitt 71 der Kurvenfläche bleibt daher der Kolben bewegungslos am OT stehen ("Wartephase"). Während dieser Zeit kann die vollständige Verbrennung des Treibstoffs in der Brennkammer 7 durchgeführt werden. Die Winkelausdehnung des dritten Abschnitts 71 wird an die dafür benötigte Zeit (die u.a. vom verwendeten Treibstoff abhängig ist) angepaßt.

Die drei Abschnitte 69, 70, 71 sind entlang des Umfangs der Kurvenfläche 3 zweimal vorgesehen, so daß während einer vollständigen Umdrehung der Welle 2 zwei vollständige Arbeits- bzw. Taktzyklen des Motors durchgeführt werden. Die äußere Kurvenfläche 4 ist in analoger Weise in den Abschnitten 69, 70, 71 entsprechende Abschnitte unterteilt.

Die beiden Stangen der Kolbenstange 5 sind jeweils an ihren beiden gegenüberliegenden Seitenflächen über Lagerrollen 66 gelagert.

Der Taktzyklus des Verbrennungsmotors wird im folgenden anhand des in Fig. 5 dargestellten Diagramms erläutert. Es sind drei Teildiagramme dargestellt, wobei als gemeinsame Ordinate die Winkelgrade der Umdrehung der Welle 2 aufgetragen sind. Als oberste strichlierte Linie im oberen Teildiagramm ist der theoretische Druckverlauf in der Brennkammer 7 dargestellt. Die durchgezogene Linie stellt den Druckverlauf in der Expansionskammer 12 bei Vollast des Motors dar, während die strichpunktierte Linie den Druckverlauf in der Expansionskammer 12 bei einem Teillastbetrieb des Motors darstellt. Die beiden horizontalen Bezugslinien in diesem Druckdiagramm beziehen sich auf den Atmosphärendruck und den absoluten Drucknullpunkt. Im linear ansteigenden Bereich 72 des Druckverlaufs in der Brennkammer 7 erfolgt die Verdichtung der Frischluft in der Brennkammer 7 durch die Verdichterpumpe 23.

Im mittleren Teildiagramm sind schematisch die einzelnen Steuerabläufe in Abhängigkeit von der Winkelstellung der Welle 2 eingezeichnet. Das untere Teildiagramm zeigt den Lauf des Kolbens zwischen seinem unteren Totpunkt UT und seinem oberen Totpunkt OT.

Während der Verdichtung der Frischluft in der Brennkammer 7 bewegt sich der Kolben 1 in Richtung seines oberen Totpunktes OT. Sobald er dort angelangt ist bzw. kurz davor erfolgt die Einspritzung von Treibstoff und Wasser in die Brennkammer 7, was durch die Balken mit den Bezeichnungen V und VI angedeutet ist. Nur beim Kaltstart des Verbrennungsmotors erfolgt eine im Diagramm strichliert eingezeichnete Zündung (Blitzsymbol) über die Zündkerze 9. Beim Kaltstart des Motors wird der Kolben 1 über den Alternator 73 angetrieben, der zu diesem Zeitpunkt als Motor, während des Dauerbetriebs hingegen als Generator betrieben wird.

Durch die Zündung des Treibstoff-Luftgemisches kommt es zu einem starken Druckanstieg in der Brennkammer 7, der dem Bereich 78 des Druckverlaufs in der Brennkammer entspricht. Nach dem vollständigen Abbrand des Treibstoff-Luftgemisches, wobei sich der Kolben 1 immer noch an seinem oberen Totpunkt OT befindet, wird das Expansionskammer-Auslaßventil 30 geschlossen (Balken VII in Fig. 5) und das Brennkammer-Auslaßventil 11 langsam geöffnet (Balken II in Fig. 5). Der Druck in der Expansionskammer 12 steigt dadurch zunächst rasch an und sinkt in der Folge bei nach unten laufendem Kolben 1 allmählich wieder ab. Im Ausführungsbeispiel nach Fig. 5 ist der Druck in der Expansionskammer 12 bei Vollastbetrieb des Motors gerade auf Atmosphärendruck abgesunken, wenn der Kolben 1 den unteren Totpunkt UT erreicht hat. Bei Teillastbetrieb des Motors wird hingegen der Atmosphärendruck bereits erreicht, während sich der Kolben 1 noch auf seinem Weg vom oberen Totpunkt zum unteren Totpunkt befindet. In der Folge kommt es im Teillastbetrieb zu einem Absinken des Drucks in der Expansionskammer 12 unter Atmosphärendruck, vorzugsweise unter den 0,8fachen Atmosphärendruck, entsprechend dem Abschnitt 74 in der strichpunktierten Linie in Fig. 5. Das Verbrennungsgas wird dadurch "verdünnt", bevor der in der Implosionsphase eingeleitet wird. Die Implosionsphase wird eingeleitet, sobald der Kolben 1 den unteren Totpunkt UT erreicht hat, indem Kühlwasser in die Expansionskammer 12 eingespritzt wird, wie durch den Balken IV in Fig. 5 angedeutet ist. Durch die schlagartige Abkühlung des Verbrennungsgases kommt es dadurch zu einem weiteren Absinken des Drucks in der Expansionskammer 12, der nun auch beim Vollastbetrieb des Motors unterhalb des Atmosphärendrucks liegt. Der Kolben 1 wird durch diesen Unterdruck nach oben gezogen und bewegt sich nunmehr vom unteren Totpunkt in Richtung des oberen Totpunkts. Während dieser Bewegung wird anfangs noch das Brennkammer-Auslaßventil 11 offengehalten, um den Ladungsaustausch in der Brennkammer 7 zu ermöglichen. Mit dem Schließen des Brennkammer-Auslaßventils nach erfolgtem Absaugen des Verbrennungsgases aus der Brennkammer 7 durch den Unterdruck in der Expansionskammer 12 wird auch das Stellglied 31 des Expansionskammer-Auslaßventils 30 geöffnet, wie aus dem Ende des Balkens VII ersichtlich ist. Es folgt die weitere Aufwärtsbewegung des Kolbens, bei der die Frischluft in der Brennkammer 7 verdichtet wird und außerdem der Druck in der Expansionskammer 12 in Richtung Atmosphärendruck ansteigt. Kurz bevor der Kolben 1 den OT erreicht, steigt der Druck in der Expansionskammer 12 über den Atmosphärendruck an und das in der Expansionskammer 12 enthaltene Verbrennungsgas-Wassergemisch wird durch das Expansionskammer-Auslaßventil 30 ausgepreßt ("Auspuffphase"). Mit Erreichen des OT des Kolbens 1 oder kurz davor erfolgt die nächste Zündung des Treibstoffs in der Brennkammer. Bis zu dessen vollständiger Verbrennung verharrt der Kolben am oberen Totpunkt ("Wartephase"), worauf durch Öffnen des Auslaßventils 11 die nächste Expansionsphase eingeleitet wird.

Bei dem in Fig. 5 dargestellten Ausführungsbeispiel erfolgt die Verdünnung des Verbrennungsgases in der Expansionskammer 12 unterhalb Atmosphärendruck nur bei einem Teillastbetrieb des Motors, um die Wirkungsgrade im Vollastbetrieb des Motors und im Teillastbetrieb des Motors möglichst aneinander anzunähern. Um den Wirkungsgrad des Motors im Vollastbetrieb zu erhöhen, könnte auch eine Verdünnung des Verbrennungsgases im Vollastbetrieb vorgesehen sein. Dies ist insbesondere bei Motoren von Vorteil, die hauptsächlich oder nur im Vollastbetrieb arbeiten (z. B. Stationärmotoren).

### Legende zu den Hinweisziffern:

- 1: Kolben
- 2: Welle
- 3: innere Kurvenfläche
- 4: äußere Kurvenfläche
- 5: Kolbenstange
- 6: Rolle
- 7: Brennkammer
- 8: wärmeisolierendes Material
- 9: Zündkerze
- 10: Einheit
- 11: Brennkammer-Auslaßventil
- 12: Expansionskammer
- 13: Leitungsstück
- 14: wärmeisolierende Schicht
- 15: wärmeisolierendes Stück
- 16: Zylinderkopf
- 17: Zylinderwand
- 18: Kolbendichtung
- 19: Einspritzdüse
- 20: O-Ring
- 21: Verdichterkolben
- 22: Kolbenstange
- 23: Verdichterpumpe
- 24: Lufteinlaßventil
- 25: Zylinderraum
- 26: Stellmotor
- 27: Motorsteuerung
- 28: Drosselklappe
- 29: Luftauslaßventil
- 30: Expansionskammer-Auslaßventil
- 31: Stellglied
- 32: Hydraulikleitung
- 33: Dichtring
- 34: Dichtring
- 35: Dichtring
- 36: Expansionskammer-Auslaßöffnung
- 37: O-Ring
- 38: Keilfläche
- 39: Fortsatz
- 40: Leitungsstück
- 41: Wasserabscheider
- 42: Wassertank
- 43: Auspuff
- 44: Nockenpumpfe
- 45: Nockenscheibe
- 46: Tauchkolben
- 47: Zylinderraum
- 48: Kurzschlußleitung
- 49: Rückschlagventil
- 50: Drosselventil
- 51: Treibstofftank
- 52: Leitung
- 53: Nockenpumpe
- 54: Nockenpumpe
- 55: Nocken
- 56: Hydraulikleitung
- 57: Nocken
- 58: Nockenpumpe
- 59: Nockenpumpe
- 60: Flanke
- 61: Drossel
- 62: Hydrauliktank
- 63: Zylinderraum
- 64: Kurvenscheibe
- 65: Achse
- 66: Lagerrolle
- 67: Steg
- 68: Kurvenscheibe
- 69: erster Abschnitt
- 70: zweiter Abschnitt
- 71: dritter Abschnitt
- 72: Bereich
- 73: Alternator
- 74: Abschnitt
- 75: Kissen
- 76: Rückschlagventil
- 77: Kolben
- 78: Bereich
- 79: Flanke

## Patentansprüche

1. Verfahren zum Betreiben eines Verbrennungsmotors, der eine Brennkammer aufweist, in der ein Treibstoff getaktet verbrannt wird und aus der das bei der Verbrennung gebildete, unter einem Überdruck stehende, heiße Verbrennungsgas in eine von der Brennkammer getrennte Expansionskammer einströmt, in der es einen Kolben verschiebt, wobei am Ende der Expansionsphase des Verbrennungsgases eine Kühlflüssigkeit in die Expansionskammer eingesprüht wird und der durch die plötzliche Abkühlung des heißen Verbrennungsgases hervorgerufene Unterdruck in der Expansionskammer auf den Kolben einwirkt und der Kolben unter Einwirkung dieses Unterdrucks Arbeit leistet, **dadurch gekennzeichnet, daß** das Verbrennungsgas zumindest in einem Teillastbetrieb des Motors bereits vor Ende der Expansionsphase des Verbrennungsgases in der Expansionskammer (12) Atmosphärendruck erreicht und sich in der Folge die Verschiebung des Kolbens (1) in die gleiche Bewegungsrichtung unter weiterer Expansion des Verbrennungsgases in der Expansionskammer (12) fortsetzt, wobei sich ein unterhalb des Atmosphärendrucks liegender Druck, vorzugsweise ein unterhalb des 0,8fachen Atmosphärendrucks liegender Druck, in der Expansionskammer (12) ausbildet und die Kühlflüssigkeit am Ende der Expansionsphase des Verbrennungsgases in das unter diesem Unterdruck stehende Verbrennungsgas eingesprüht wird, wobei sich der Druck des Verbrennungsgases weiter verringert.

2. Verfahren nach Anspruch 1, **dadurch gekennzeichnet, daß** der Kolben (1) als Hubkolben ausgebildet ist, der in der als Zylinder ausgebildeten Expansionskammer (12) verschiebbar gelagert ist, wobei zwischen der Expansionskammer (12) und der Brennkammer (7) ein steuerbares Brennkammer-Auslaßventil (11) vorgesehen ist, welches nach der im wesentlichen vollständigen Verbrennung des Treibstoffes in der Brennkammer (7) geöffnet wird, wobei sich der Kolben (1) im Bereich seines oberen Totpunktes (OT) befindet.

3. Verfahren nach Anspruch 2, **dadurch gekennzeichnet, daß** die Einsprühung der Kühlflüssigkeit erfolgt, wenn sich der Kolben im Bereich seines unteren Totpunktes (UT) befindet.

4. Verfahren nach Anspruch 2 oder Anspruch 3, **dadurch gekennzeichnet, daß** der Kolben über eine Kolbenstange mit einem Verdichterkolben (21) einer Verdichterpumpe (23) zur Verdichtung von Luft in der Brennkammer (7) verbunden ist, wobei die Verdichtung während der Aufwärtsbewegung des Kolbens (1) vom unteren Totpunkt (UT) zum oberen Totpunkt (OT) erfolgt und vom Unterdruck in der Expansionskammer (12) bewirkt bzw. unterstützt wird.

5. Verfahren nach einem der Ansprüche 2 bis 4, **dadurch gekennzeichnet, daß** an der Kolbenstange (5) des Kolbens (1) zumindest eine Rolle (6) angeordnet ist, die ein Schubglied eines Kurvengetriebes bildet, wobei an der Rolle (6) beidseitig Kurvenflächen (3, 4) des in beide Hubrichtungen des Kolbens (1) wirkenden Kurvengetriebes anliegen.

6. Verfahren nach einem der Ansprüche 2 bis 5, **dadurch gekennzeichnet, daß** die Kurvenflächen (3, 4) einen ersten, der Abwärtsbewegung des Kolbens vom oberen Totpunkt zum unteren Totpunkt zugeordneten Abschnitt (69), einen zweiten, der Aufwärtsbewegung des Kolbens vom unteren Totpunkt zum oberen Totpunkt zugeordneten Abschnitt (70) und einen dritten Abschnitt (71) aufweisen, in dem die Kurvenflächen (3, 4) einen konstanten Abstand vom Mittelpunkt der Welle (2) aufweisen, um die sie sich umfangsgeschlossen erstrecken, und der der Stellung des Kolbens in seinem oberen Totpunkt zugeordnet ist, wobei die Winkelausdehnung des dritten Abschnitts (71) an die Dauer der Verbrennung des Treibstoffs in der Brennkammer (7) angepaßt wird, wobei gerade ausreichend Zeit zur vollständigen Verbrennung des Treibstoffs zur Verfügung gestellt wird.

7. Verfahren nach einem der Ansprüche 1 bis 6, **dadurch gekennzeichnet, daß** der Druck des Verbrennungsgases in der Expansionskammer unmittelbar vor Einleitung der Implosionsphase oberhalb des 0,3fachen Atmosphärendrucks liegt.

8. Verfahren nach einem der Ansprüche 1 bis 7, **dadurch gekennzeichnet, daß** auch im Vollastbetrieb des Motors der Druck des Verbrennungsgases in der Expansionskammer (12) am Ende der Expansionsphase unterhalb des Atmosphärendrucks, vorzugsweise unterhalb des 0,9fachen Atmosphärendrucks liegt.

9. Verbrennungsmotor mit einer Brennkammer (7) zur getakteten Verbrennung eines Treibstoffes unter Bildung eines Verbrennungsgases und einer mit der Brennkammer (7) über ein steuerbares Brennkammer-Auslaßventil (11) verbundenen, separaten Expansionskammer (12), die einen verschiebbar gelagerten Kolben (1) zur Umsetzung von Energie des Verbrennungsgases in mechanische Arbeit bzw. Energie aufweist, wobei zumindest eine in die Expansionskammer (12) mündende Einspritzdüse (19) zum Einsprühen einer Kühlflüssigkeit zur plötzlichen Volumsverringerung des expandierten Verbrennungsgases vorgesehen ist, **dadurch gekennzeichnet, daß** an der Kolbenstange (5) des Kolbens (1) zumindest eine Rolle (6) angeordnet ist, die ein Schubglied eines Kurvengetriebes bildet, wobei an der Rolle (6) beidseitig Kurvenflächen (3, 4) des in beide Hubrichtungen des Kolbens (1) wirkenden Kurvengetriebes anliegen.

10. Verbrennungsmotor nach Anspruch 9, **dadurch gekennzeichnet, daß** das Brennkammer-Auslaßventil (11) als mit einer Verzögerungszeit öffenbares Drosselventil ausgebildet ist
und die vom heißen Verbrennungsgas berührten Teile dieses Brennkammer-Auslaßventils
(11) aus einem wärmeisolierenden Material, vorzugsweise einer Keramik, bestehen oder auf der Außenseite des Verbrennungsmotors von einer wärmeisolierenden Ummantelung umgeben sind.

11. Verbrennungsmotor nach Anspruch 9 oder Anspruch 10, **dadurch gekennzeichnet, daß** zur hydraulischen Betätigung des Brennkammer-Auslaßventils (11) eine Nockenpumpe (59) vorgesehen ist, die von einem Nocken betätigt wird, der auf einer über das Kurvengetriebe angetriebenen Welle (2) angeordnet ist, und mit einer das Brennkammer-Auslaßventil (11) betätigenden Hydraulik-Zylinder-Einheit des Brennkammer-Auslaßventils (11) verbunden ist, wobei der Nocken eine allmählich ansteigende Fläche zur allmählichen Öffnung des Brennkammer-Auslaßventils (11) aufweist.

12. Verbrennungsmotor nach Anspruch 11, **dadurch gekennzeichnet, daß** in der Rücklaufleitung der Hydraulikflüssigkeit vom Zylinderraum (63) der Hydraulik-Zylinder-Einheit des Brennkammer-Auslaßventils (11) zu einem Hydrauliktank (62) eine Drossel (61) vorgesehen ist.

13. Verbrennungsmotor nach einem der Ansprüche 9 bis 12, **dadurch gekennzeichnet, daß** zum Einspritzen des Treibstoffs in die Brennkammer (7) eine Nockenpumpe (44) vorgesehen ist, die von einem Nocken betätigt wird, der auf einer über das Kurvengetriebe angetriebenen Welle (2) angeordnet ist und die mit einer in die Brennkammer (7) mündenden Einspritzdüse verbunden ist, wobei zur Regelung der eingespritzten Treibstoffmenge eine Kurzschlußleitung (48) von der Nockenpumpe (44) zum Treibstofftank (51) vorgesehen ist, in der ein steuerbares Drosselventil (50) angeordnet ist.

14. Verbrennungsmotor nach einem der Ansprüche 9 bis 13, **dadurch gekennzeichnet, daß** zur Einspritzung des Implosionswassers in die Expansionskammer (12) eine Nockenpumpe (54) vorgesehen ist, die von einem Nocken betätigt wird, der auf einer über das Kurvengetriebe angetriebenen Welle (2) angeordnet ist und mit einer Einspritzdüse (19) zur Einsprühung des Kühlwassers in die Expansionskammer (12) verbunden ist, wobei zur Regelung der eingespritzten Kühlflüssigkeitsmenge eine Kurzschlußleitung von der Nockenpumpe zum Wassertank (42) vorgesehen ist, in der ein steuerbares Drosselventil angeordnet ist.

15. Verbrennungsmotor nach einem der Ansprüche 9 bis 14, **dadurch gekennzeichnet, daß** ein Expansionskammer-Auslaßventil zum Einschluß bzw. Ablaß des Verbrennungsgases aus der Expansionskammer (12) einen außen um eine oder mehrere Expansionskammer-Auslaßöffnungen (36) verlaufenden, elastischen O-Ring 37 umfaßt, dessen Ventilsitz einer
seits von einem Fortsatz an der Zylinderwand (17) bzw. am Zylinderkopf (16) und andererseits von einer Keilfläche (38) eines Stellgliedes (31) gebildet wird, das über Beaufschlagung durch Hydraulikflüssigkeit zwischen einer ersten, geöffneten Stellung der Expansionskammer-Auslaßöffnungen (36) und einer zweiten, geschlossenen Stellung der Expansionskammer-Auslaßöffnungen (36) verschiebbar ist.

16. Verbrennungsmotor nach einem der Ansprüche 9 bis 15, **dadurch gekennzeichnet, daß** zur Verringerung von Konvektionswärmeverlusten des heißen Verbrennungsgases in der Expansionskammer (12) die Kurvenflächen des Kurvengetriebes einen ersten Abschnitt (69) aufweisen, der der Abwärtsbewegung des Kolbens vom oberen Totpunkt zum unteren Totpunkt zugeordnet ist, und einen zweiten Abschnitt (70) aufweisen, der der Aufwärtsbewegung des Kolbens vom unteren Totpunkt zum oberen Totpunkt zugeordnet ist, wobei die Winkelausdehnung des zweiten Abschnittes (70) der Kurvenfläche (3, 4) um das 1,5fache bis 2,5fache größer ist als die Winkelausdehnung des ersten Abschnittes (69) des Kurvengetriebes.

17. Verbrennungsmotor nach Anspruch 16, **dadurch gekennzeichnet, daß** die Kurvenflächen (3, 4) zwischen einem zweiten Abschnitt (70) und einem ersten Abschnitt (69) einen dritten Abschnitt (71) aufweisen, in dem die Kurvenfläche (3, 4) einen konstanten Abstand vom Mittelpunkt der Welle (2) aufweist, um die sie sich umfangsgeschlossen erstreckt, und der der Stellung des Kolbens in seinem oberen Totpunkt zugeordnet ist.

18. Verbrennungsmotor nach einem der Ansprüche 9 bis 17, **dadurch gekennzeichnet, daß** der Verbrennungsmotor mindestens zwei gegenüberliegende Kolben (1) aufweist, die über jeweils eine oder mehrere an ihren Kolbenstangen (5) angeordnete Rollen (6) auf die gleichen Kurvenflächen (3, 4) wirken und synchron getaktet sind.

19. Verbrennungsmotor nach Anspruch 18, **dadurch gekennzeichnet, daß** mehrere gegenüberliegende Paare von Kolben (1) vorgesehen sind.

20. Verbrennungsmotor nach einem der Ansprüche 9 bis 19, **dadurch gekennzeichnet, daß** das Hubvolumen der Expansionskammer im Verhältnis zum Volumen der Brennkammer (7) und zum Hubvolumen der Verdichterpumpe (23) derart gewählt ist, daß im Vollastbetrieb des Motors der Druck des Verbrennungsgases in der Expansionskammer (12) am Ende der Expansionsphase unterhalb des Atmosphärendrucks, vorzugsweise unterhalb des 0,8fachen Atmosphärendrucks liegt.
